# EUROPEAN PATENT APPLICATION

(11) **EP 2 589 911 A1**
(43) Date of publication of application: **08.05.2013**
(21) Application number: 11187398.0
(22) Date of filing: 01.11.2011
(51) Int. Cl.: F27B 15/02, C04B 2/02, C04B 2/06

(54) **Calcination reactor system**

(71) Applicant: Alstom Technology Ltd, 5400 Baden (CH)
(72) Inventor: Balfe, Michael Charles, 65203 Wiesbaden (DE)
(74) Representative: Simonsson, Erik

(57) **Abstract**

The invention relates to a method for decarbonisation of metal carbonate MeCO₃ comprising into metal oxide MeO and carbon dioxide CO₂: fluidizing MeCO₃ in a fluidized bed reactor using CO₂ rich exhaust gas stream from an oxy combustion process to produce a MeO rich stream and a CO₂ rich stream; heating the MeCO₃ to a temperature for decarbonisation of the metal carbonate MeCO₃ into metal oxide MeO and carbon dioxide CO₂; wherein the temperature is corresponding to the equilibrium pressure of carbon dioxide CO₂; providing residence time for said metal carbonate MeC03 required for said decarbonisation into calcium oxide and carbon dioxide; adjusting the partial pressure of carbon dioxide; transporting a metal carbonate MeCO₃ stream to the fluidized bed reactor for decarbonisation by a circulating fluidized bed (CFB); and separating carbon dioxide CO₂ from the metal carbonate MeCO₃ stream to form metal carbonate MeCO₃ rich stream before its decarbonisation in the fluidized bed reactor. The invention relates also to a system 1 for decarbonisation of metal carbonates into metal oxides and carbon dioxide.

## Description

### Field of the invention

The present invention relates to a method for decarbonisation of carbon dioxide into a carbon dioxide (CO₂) rich flue gas.

The present invention relates to a system for decarbonisation of carbon dioxide (CO₂), in particular for the calcination of CaCO₃.

### Background of the invention

In a system for decarbonisation of CO₂, more particularly for the decarbonisation (or calcination) of limestone (CaCO₃) particles, heat input is required to shift the point of equilibrium (endothermic reaction) so that CO₂ is released. In particular for CO₂ capture purposes, where a close to pure CO₂ product is desired, high temperatures (∼900°C and above) are required at atmospheric pressure. Due to the nature of the equilibrium reaction, if the reactor temperature is allowed to drop below 890-900°C (in a CO₂ environment at 1 atm) the calcination reaction stops completely. As a particle of CaCO₃ undergoes decarbonisation a porous layer of CaO is formed. Depending on the decarbonisation environment the surface to volume ratio of formed CaO can be influenced. Due to a type of sintering effect the surface to volume area decreases at increased temperatures. When the decarbonisation temperature is chosen to be much higher than 900 °C, to avoid the aforementioned stoppage of reaction, a resulting loss of surface area per unit volume and particle reactivity is encountered. This has a particular negative impact if the CaO which is formed is intended for use as sorbent in a process which captures CO₂ from flue gas. The rate of deactivation of the CaO which is formed is a function of many variables but most importantly the reaction temperature and particle residence time at elevated temperatures. Due to the delicate nature of the porous CaO layer, especially at high temperatures, particle handling should be as gentle as possible. The particle handling becomes even more important in light of the fact that the decarbonization reaction for CaCO₃ is quite slow so that rather long reaction times are required. Based on experimental results for the calcination of CaCO₃ in a pure CO₂ environment at atmospheric pressure, -70 min is required to convert ∼70% of CaCO₃ to CaO at 920°C. The conversion rate can be increased at increased temperatures (ie.95% at 1020 °C) but is associated with sorbent (CaO) deactivation. This is discussed in Y.Wang, S. Lin, Y. Suzuki, 'Study on limestone calcination with CO2 capture: Decomposition behavior in a CO2 atmosphere', Energy & Fuels, 21: 3317-3321, 2007, and also in Y.Wang, S. Lin, Y. Suzuki, 'The Experimental study on CO2 capture conditions of a fluidized bed limestone decomposition reactor', Fuel Processing Technology 91: 958-963, 2010.

The equilibrium of the decarbonisation reaction can also be manipulated by a reduction the CO₂ partial pressure during calcination. This is discussed in J.Blamey, E.J. Anthony, J. Wang, and P.S. Fennell, 'The calcium looping cycle for large scale CO2 capture', Progress in Energy and Combustion Science, 36:260-279, 2010. The shifting point temperature where the decarbonisation reaction occurs and where the reaction stops is defined by the equilibrium partial pressure of CO₂ over CaCO₃ at atmospheric pressure. Therefore, considering the presence of an inert gas which lowers the partial pressure of CO₂ over CaCO₃ the temperature required to release CO₂ can be reduced. As long as the inert gas can be separated easily from the CO₂ product stream, such an inert substance can be used to reduce the temperature level required for the calcination reaction, allowing some flexibility with regard heat source selection.

Thus there is a need for a reaction method and system for decarbonisation of carbon dioxide from CaCO₃ into a CO₂ rich flue gas which: allows careful control of the calcination reactor temperature; is gentle with regard to particle handling;
provides adequate particle residence time for CaCO₃ conversion; has good mixing characteristics to ensure continuous reaction ie. minimize cold spots with temperatures less than 900°C.

Circulating fluidized bed (CFB) reactor systems are currently applied for the above described purpose. CFB systems are composed of a section, where solids are transported via a fluidization gas upwards in an apparatus that is generally called a riser. Fluidization velocities in the riser are often much greater than the single particle terminal velocity such that a gas-solid separation device is required to recover entrained particles. After the particles are recovered they are transported back down to the CFB riser inlet via a stand pipe often called the CFB downer. The CFB riser may be operated with higher or lower gas/vapor flow rates and gas/vapor superficial velocities. Lower velocities are associated with a fast fluidized operating regime and higher gas/vapor velocities with a pneumatic transport regime. The hold-up concentration of solids in the CFB becomes lower at high fluidization velocities and the required circulation rate of particles increases. Regardless of which operating regime the fast fluidized or pneumatic transport regimes for CFB risers have characteristically high void fractions (low solid concentrations). The classical CFB downer resembles more a moving bed with higher solids concentrations but has characteristically no means for supplying heat to the process.

Reactors currently used for decarbonisation or calcination of CaCO₃ are commonly found in the cement industry. The reactors are heated via air-fired combustion of coal and/or waste. A series of cyclones act as a method of preheating the cold limestone feed which cools reactor offgas countercurrently. The average particle size is typically small to avoid a negative impact on the calcination process due to increasing heat transfer resistance in larger particles. Down stream the calciner is a rotating kiln often called the clinker oven. The surface structure and characteristics of lime (CaO) feeding the clinker over is of little significance in the cement plant since the final temperature of the material leaving the clinker oven is well above 1200°C. Thus little attention is given to controlling the calcination temperature. Large quantities of nitrogen in the combustion gas heating the reacting CaC03 lead to the onset of calcination at significantly lower operating temperatures (770 - 780°C for flue gas with ∼12-13% CO₂) but rule out the reactor scheme CO₂ capture purposes.

Currently different reactor schemes are being developed specifically for CO₂ capture purposes, some make and effort to combine air fired processes to eliminate the requirement for oxygen based combustion, see for example Abanades, " Conceptual design of a three fluidized beds combustion system capturing CO2 with CaO", International Journal of Greenhouse Gas Control, vol 5, (2011), pages 498-504. One draw back of the proposed system is the required high combustion temperatures, to transfer adequate heat via direct solids heat transfer, leads to a damaging the reactant increasing the required purge rates. Lower temperatures are associated with larger solids circulations rates and increased blower power for fluidization.

In other systems applying CFB reactors high gas velocities imply solids recirculation in order to provide adequate residence time for CaCO₃ conversion. High gas velocities tend to polish the delicate CaO layer of sorbent particles with repeated cyclone passes at high temperatures.

Solids recirculation systems are characteristically not heated therefore the reaction temperature is either chosen to be higher than necessary for the reaction, or a large portion of the system volume is not partaking in the reaction due to endothermic cooling of the reacting particles.

### Summary of the invention

The following invention, the method and the system, facilitates the calcination reaction by means of a fluidized bed reactor, for example a bubbling fluidized bed reactor, integrated into the Circulating fluidized bed (CFB) downer system. A modification to move the CFB downer system into a bubbling bed regime via the addition of a small amount of fluidization gas/vapor provides several advantages and eliminates some of the drawbacks and deficiencies of the prior art reactors.

An embodiment of the invention is a method for decarbonisation of metal carbonate MeCO₃ into metal oxide MeO and carbon dioxide CO₂ comprising:
fluidizing MeCO₃ in a fluidized bed reactor using CO₂ rich exhaust gas stream from an oxy combustion process to produce a MeO rich stream and a CO₂ rich stream;
heating the MeCO₃ to a temperature for decarbonisation of the metal carbonate MeCO₃ into metal oxide MeO and carbon dioxide CO₂; wherein the temperature is corresponding to the equilibrium pressure of carbon dioxide CO₂,
providing residence time for said metal carbonate MeCO₃ required for said decarbonisation into metal oxide MeO and carbon dioxide CO₂,
adjusting the partial pressure of carbon dioxide; transporting a metal carbonate MeCO₃ stream to the fluidized bed reactor for decarbonisation by a circulating fluidized bed (CFB);
separating carbon dioxide CO₂ from the metal carbonate MeCO₃ stream to form metal carbonate MeCO₃ rich stream before its decarbonisation in the fluidized bed reactor.

An embodiment of the method is wherein the residence time is provided by a fluidized bed reactor selected from a bubbling fluidized bed reactor or turbulent fluidized bed reactor; preferably a bubbling fluidized bed reactor.

An embodiment of the invention is a method wherein the metal carbonate MeCO₃ is heated to a temperature allowing spontanious decarbonization, for CaCO₃ this temperature depends on the partial pressure of CO₂ and may range up to 950 °C, typically heated to a temperature between 850 and 950 °C.

An embodiment of the invention is a method wherein the partial pressure of CO₂ is adjusted by adding inert components, such as by adding water.

Also, the method may include heating of the fluidized bed reactor by a combination of direct and indirect methods.

According to other aspects illustrated herein an embodiment of the invention is a system for decarbonisation of metal carbonate comprising:
- a fluidized bed reactor wherein the decarbonisation of metal carbonate (MeCO₃) into metal oxide (MeO) occurs;
   the reactor is a fluidized bed operating at a temperature above the temperature above temperature corresponding to the equilibrium pressure of carbon dioxide CO₂,
   providing residence time for metal carbonate MeCO₃ required for decarbonisation into metal oxide, MeO and carbon dioxide CO₂; and wherein the partial pressure of carbon dioxide is adjusted;
- separating unit for separating into carbon dioxide CO₂ rich flue gas stream and metal oxide MeO rich stream;
- heating system for heating said fluidized bed reactor, providing heat at an adequate temperature for the decarbonisation of metal carbonate;
- a circulating fluidized bed (CFB) riser used to transport a metal carbonate MeCO₃ rich stream to said separating unit before entering said fluidized bed reactor;
- duct forwarding said carbon dioxide CO₂ rich flue gas stream for further processing;
- pipe forwarding MeO rich stream for further processing; and
- pipe forwarding MeCO₃ rich stream to said CFB riser.

The different pipes may all enter the CFB riser at the same location.

A maximal bed-wall heat transfer coefficient can be achieved by the system due to the high particle concentration in the fluidized bed reactor. An opportunity to locally influence the CO₂ partial pressure is provided by the introduction of an inert component such as water, and also by selection of fluidization velocity.

The residence time for solid MeCO₃ provided shall be ample for decarbonisation into calcium oxide and carbon dioxide, and adjusted thereto.

The fluidized bed reactor and the circulating fluidized bed (CFB) riser may be integrated into one piece of equipment where the hot gas exits tubes which are protruding into the lower section of the CFB riser protecting the fluidized bed of fluidized material below the tube ends and transporting material above the tube ends to the separating unit.

The circulating fluidized bed (CFB) riser is used to forward a metal carbonate MeCO₃ rich stream to separating unit before it enters said bubbling fluidized bed reactor. The CFB riser forwards the metal carbonate MeCO₃ rich stream to separating unit via hot combustion gases exiting the polisher (direct, with oxyfuels) or some other fluidization medium (indirect, with alternative heat source, air fired etc.).

In the case of direct heating utilizing oxygen for combustion and oxy-fluels, a relatively high concentration of oxygen can be used in the initial combustion process achieving high temperatures and improving heat transfer the rest oxygen can be allowed to react further in the CFB riser section by the further addition of fuel (such as coal) which is converted releasing heat and allowing for additional calcination in the riser section of the CFB as well.

According to one embodiment of the method and the system the required residence time is provided by a fluidized bed reactor selected from a bubbling fluidized bed reactor or turbulent fluidized bed reactor; preferably a bubbling fluidized bed reactor. Further, additional residence time is provided by the coupling of a fluidized bed reactor selected from a bubbling fluidized bed reactor or turbulent fluidized bed reactor; preferably a bubbling fluidized bed reactor.

An advantage obtained by the system comprising the bubbling fluidized bed reactor is that a reduction of heat transfer surface area may be obtained due to higher heat transfer coefficients beyond what can be expected for a common gas-gas heat exchanger systems. This is most important for an indirect air fired system where flue gas volumes are high.

Because the large volume flow is separated from the fluidized bed by some type of internals (for example tubes) particles remain densely fluidized in a bubbling bed regime. As such the residence time for the solid particles of calcium carbonate is also increased.

Also, a uniform temperature profile may be obtained by the method and by the system as herein defined, wherein hot spots or over heated single particles which may undergo sintering and/or deactivation (loss of surface area) are avoided. The deactivation causes loss of surface area.

Further, the reaction volume of the system may be maintained at temperatures slightly above the temperature corresponding to the equilibrium partial pressure of carbon dioxide ensuring an optimal utilization per unit volume of equipment.

In the system, the order of the CFB riser and the reactor are reversed such that the metal oxide MeO rich solid stream leaving the calcination reactor is transported upwards in the CFB riser on route to a carbonation process for CO₂ capture purposes.

The decarbonisation reaction may occur by, for example limestone. Limestone includes different metal carbonates and the metal carbonate included in the calcination process may be selected from calcium carbonate (CaCO₃), for example in form of calcite or aragonite; magnesium carbonate (MgCO₃), for example in form of magnesite, alumina carbonate (Al₂(CO₃)₃), zinc carbonate (ZnCO₃) or in form of calcium magnesium carbonate, such as dolomite (CaMg(CO₃)₂). The list is not exhaustive.

According to one embodiment of the heating system provides temperatures between 850 and 950 °C for decarbonisation of metal carbonate MeCO₃ into CO₂ and MeO, typically for calcium carbonate CaCO₃ into CO₂ and CaO. The heating system may be an oxy fueled firing system such as an oxy-fuel combustion system or a oxyfired gas turbine (direct); alternatively, the heating system is separated from the process of transporting solids (indirect) such as an air fired system.

According to one embodiment of the invention adjustment of the partial pressure of CO₂ is provided by the addition of an inert component in the fluidized bed reactor. This inert component is other than carbon dioxide CO₂.

Further, the means for adjusting the equilibrium pressure of carbon dioxide via the addition of water to the fluidized bed reactor, for example the bubbling fluidized bed reactor; in an option the water is added via recycling flue gas containing water. Due to the high particle concentration in the reactor there is provided an opportunity to locally influence the CO₂ partial pressure by the introduction of this inert component.

The addition of water is a way of adjusting, preferably reducing, the equilibrium partial pressure of carbon dioxide CO₂ of the reactor wherein the decarbonisation or calcination, reaction takes place. Thus, the required reaction temperature is lowered. The water may be added either as the primary fluidization medium, or recycled by way of flue gas containing water.

By reducing the equilibrium pressure of carbon dioxide the temperature differences for heat transfer are possibly increased or a new heat source may be utilized which without this arrangement would not be feasible.

Thus, the invention provides a system wherein the required temperature for decarbonisation may be lowered from 900 to 850 °C, and thus may be applied in power plants operating at temperature less than 950 °C. Further the lowering of the reaction temperature has a positive effect on the sorbent activity.

According to an embodiment of the invention the heating of the bubbling fluidized bed reactor is performed by heating via an oxy fueled process generating hot combustion gases which are subsequently used in the CFB riser for reaction and transport purposes (direct).

Further, the heating of the bubbling fluidized bed reactor may be performed by an alternative heat source (air fired combustion, circulating gas, liquid or solid stream) and a separate transport medium is required in the CFB riser (indirect).

### Brief description of the Drawings

The present invention is described in more detail below with reference to the appended drawings in which:
Fig. 1 is a schematic view of a system for decarbonation via oxy fuel combustion and direct transport and reaction via a CFB riser.
Fig. 2 is a schematic view of a system for decarbonation via an alternative heating source and indirect transport of solids in the CFB riser.

### Detailed description of the invention

The method and system of the invention may include heating of the reactor via oxygen based combustion and direct transport, or by heat input via and alternative source and indirect transport, or a combination of both processes.

By the term "direct" it is herein meant the utilization of hot combustion gas from an oxygen based combustion process for transport of solids in the CFB riser. In this sense the term "direct heating" refers to the mechanism of heat transfer between gas and particle, therefore requiring a form of oxy-combustion (oxy-boiler, or oxy-fired gas-turbine).

By the term "indirect" it is herein meant any alternative heating medium (hot solids stream, gas or liquid) and solids transport via fluidization with some other fluid than that of the combustion off-gas. In this case "direct heating" is not possible between gas and particle.

By the term 'bubbling fluidized bed reactor' or 'BFB' it is herein meant a reactor wherein the fluidization of the solids present in the reactor remain almost completely in the reactor,. The solids behave like a liquid "bubbling" in the reactor but a noticeable transition or surface is recognisable between the bed and the freeboard.

By the term 'turbulent fluidized bed reactor' it is herein meant a reactor wherein the state of fluidization in the reactor is more turbulent than the BFB and some of the smaller fluidized particles are carried up high into the freeboard and may leave the reactor. The transition between the bubbling bed surface and the so call freeboard is less defined.

By the term 'fast fluidized' or 'circulating fluidized' bed 'CFB' reactor it is herein meant a reactor wherein all fluidized solids are carried out of the bed. There is not longer a bubbling bed but rather a lower dense region and an upper less dense region.

The decarbonisation is an endothermic reaction, thus it requires heat input and the reaction is performed at a temperature which is sufficiently high to drive the reaction in a close to pure CO₂ environment (at least 900°C for pure CO₂ and less for diluted CO₂).

If a section of the reactor system drops below 900 °C, such as 899 °C or less, in an environment of pure CO₂ at 1 atm, the decarbonisation reaction stops completely.

In a classical CFB reactor system the temperature may rapidly sink in the downer so that the reaction is completely stopped, alternatively if an increased reaction temperature for the CFB riser is selected (to avoid the first problem of cooling below 899°C in the downer) the sorbent may be damaged due to sintering effects.

Thus the fluidized bed reactor 10, especially the bubbling fluidized bed reactor provides a significant improvement. Also, the temperature controlled in the bed can be very close to constant due to the high degree of mixing, thus hot spots can also be avoided.

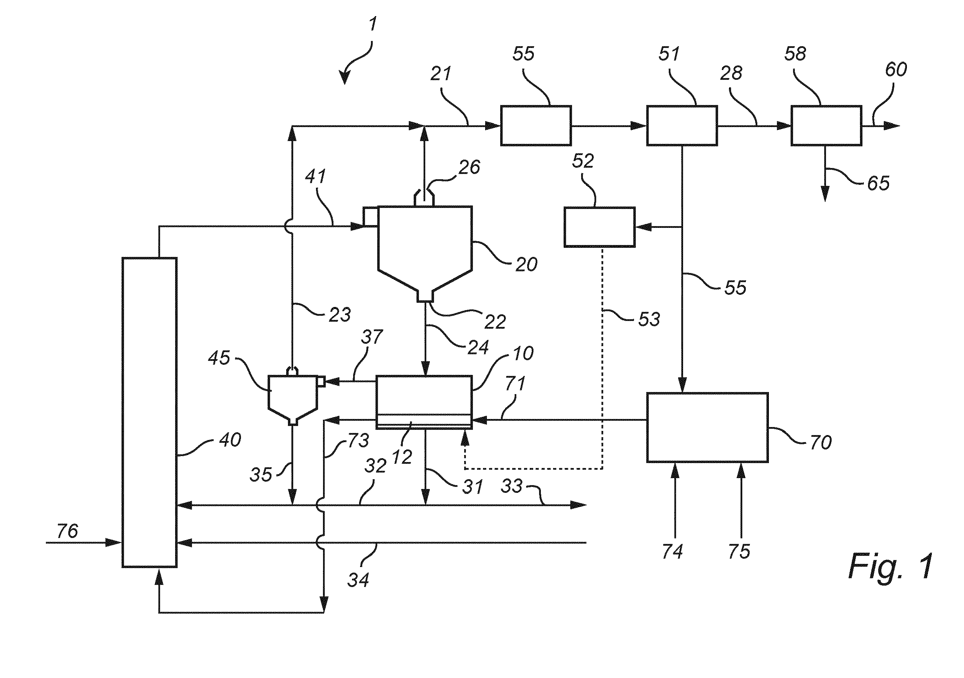

Figure 1 is a schematic representation of the system for decarbonisation. The system 1 for decarbonisation comprises a fluidized bed reactor 10 being a bubbling fluidized bed reactor wherein the reaction occurs, thus the decarbonisation of a metal carbonate into metal oxide MeO and carbon dioxide CO₂, for example calcium carbonate (limestone) CaCO₃ into calcium oxide (lime) CaO and carbon dioxide CO₂. The reaction is also called calcination. The system 1 is, for example, integrated together with a system for carbonation, thus a system wherein CO₂ in, for example, a flue gas is captured by reaction with calcium oxide, CaO, to form calcium carbonate CaCO₃. The calcium carbonate CaCO₃ rich stream is fed to the system 1via pipe 34 into a CFB riser 40. For example, the calcium carbonate CaCO₃ rich stream is forwarded from a carbonation reactor. Together with the calcium carbonate also some remaining calcium oxide resulting from the reaction of decarbonisation may be fed into the CFB riser via pipe 32. Fig. 1 illustrates a system wherein the bubbling fluidized bed reactor 10 is heated via an oxygen based combustion process and the resulting combustions gasses are used for fluidization, transporting and heating particles in the CFB riser. In this system heat is supplied by a combustion system generating hot combustion gases, such as for example carbon dioxide CO₂ and possibly water vapor H₂O, in an oxy fired process. This process may be performed in any suitable equipment, and with any fuel type including solid fuels such as coal and may have the form of a radiant heater, a boiler, a gas turbine etc.

In this embodiment the reactor is heated by a heating system 12 where hot combustions gasses, hot gas stream 71 generated by the oxy combustion process in 70 via duct 73, are used for subsequent direct transport and heating of solids in the CFB riser 40.

The system utilizes direct heating in the CFB riser due to the high CO₂ content of stream 71 produced via the oxy combustion process in 70, which is fed with fuel (any form, including coal, waste, etc) and oxygen, forwarded via duct 74 and duct 75 respectively.

Although schematically the bubbling fluidized bed reactor 10 is separated from the CFB riser 40, it is also possible to combine both unit operations into one piece of equipment where the lower section is dedicated to the function of bubbling fluidized bed reactor 10 and the upper section to the function of CFB riser 40. In this manner the stream 73 defines the transition from the first function to the second.

The solid stream separated in the separating unit 20 is forwarded to the bubbling fluidized bed reactor 10 via the outlet 22 and duct 24. The solid stream is entering at the top of the bubbling fluidized bed reactor 10.

A smaller quantity of recycled combustion gas at higher pressure is fed to the reactor via duct 53 (to overcome the increased pressure drop of the solids in the bubbling fluidized bed reactor) alternatively steam can be utilized to replace or supplement this stream which is also recycled in the system split from the stream of carbon dioxide rich flue gas forwarded from the separating unit via outlet 26 and duct 21. The gas stream forwarded via duct 21 is passing a cooler 55. A portion of the CO₂ exiting may be left above 500°C depending on the type of CO₂ recycle fan, however, at one point the CO₂ stream needs to be cooled to remove water condensate before transport, the desired temperature depends on the available utilities and the final product specifications.

The carbon dioxide rich gas may be forwarded for further processing via duct 28. Optionally, the water content may be reduced in a condenser 58, before the further processing of the carbon dioxide rich gas (the CO₂ product) via duct 60. The water and condensate leave the system in a separate stream 65.

The gas passing in duct 21 and recirculated into the system is passing a fan 51 for pressurizing the gas stream before it is recycled for the purpose moderating the oxygen based combustion process and additionally for transport and heating purposed of the CaCO₃ rich stream entering the CFB riser 40 (via pipe 34) and finally exiting 40 with entrained solids which are separated by way of the separating unit 20.

The bubbling fluidized bed reactor 10 is more specifically a bubbling fluidized bed heat exchanger wherein the solids being fluidized are reacting. The reactor is fed with either a CO₂ rich fluidizing gas via 53 or a supplemented stream of steam or some other gas allowing subsequent separation. The carbon dioxide rich gas is further divided into a second, larger stream, which is pressurized to a lesser degree via fan 52 and forwarded via duct 53 into the combustion unit 70 as moderation gas. The combustion product gas in 71 heats the reactor and finally heats and transporting solids in 40 via direct heat transfer. Excess oxygen may be allowed to remain in the gas exiting 70 via duct 73 with the intention of allowing subsequent reaction with additional fuel added at the same location as the CaCO₃ rich solid stream. In this manner not only does the transport gas allow direct heating but also allows further combustion in the CFB riser section.

In this manner, a relatively high concentration of oxygen can be used in the initial combustion process, achieving high temperatures in the bubbling fluidized bed section for improved heat transfer, while the rest oxygen reacts further in the CFB riser section by the further addition of fuel (such as coal) which is converted releasing heat and allowing for additional decarbonisation in the CFB riser as well.

The decarbonisation reaction produces carbon dioxide and calcium oxide CaO which, after finalized reaction in the reactor 10, is forwarded from via pipe 31 for further processing or passes to the CFB riser for entrainment and transport in 40 and finally separation in 20. The CaO rich solids stream may be divided into a stream forwarded via pipe 33 to a system for carbonation; a process for capturing carbon dioxide CO₂. Another portion may be forwarded back to the CFB riser 40, via pipe 32.

If units 10 and 40 are not built together, a small portion of the solids reacting in 10 are entrained in the fluidization gas and evolving CO₂ which are separated in the separating unit 45, wherein the separation of solid and gas is performed. For example, the separating unit 45 is a cyclone. The gas stream from the reactor is routed via duct 37 to the separating unit 45, then the separated CO₂ is forwarded to duct 21, via duct 23. The calcium oxide CaO is forwarded via pipe 35 back to the CFB or to the carbonation reactor via 35.

If units 10 and 40 are built together, the small portion of entrained solids, in addition to the entire gas flow, rise into the CFB riser in parallel to stream 73. In this case the level of the dense solid phase is below the ends of the pipes (internals) where 73 enters into the CFB riser and defines the point at which the lower bubbling fluidized bed reactor function ends and the upper CFB reactor function begins. In this case separation unit 45 and the connecting streams are not required.

In any case, a CaO rich solid stream is removed from the bubbling fluidized bed reactor, unit 10, via pipe 31. The solids may be either sent to a connected carbonator reactor system or battery limit as CaO product via pipe 33.

The advantages of the system and method for decarbonisation of carbon dioxide from CaCO₃ into a CO₂ rich flue gas as described hereinbefore are that the system and method: allows careful control of the bubbling fluidized bed reactor temperature; is gentle with regard to particle handling; provides adequate particle residence time for CaCO₃ conversion; and has good mixing characteristics to ensure continuous reaction ie. minimize cold spots with temperatures less than 900°C.

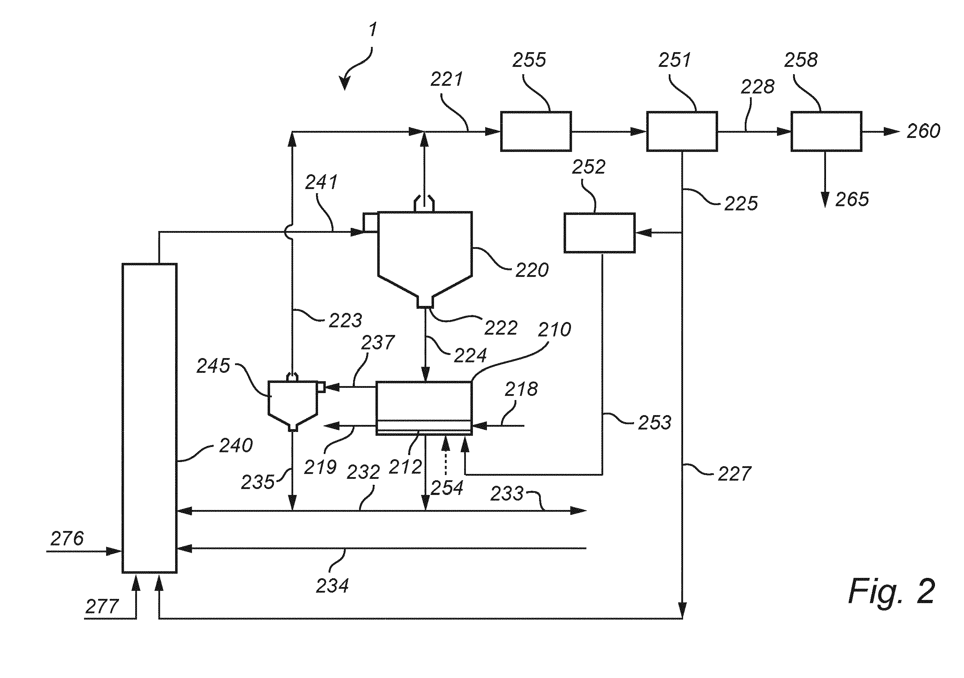

Figure 2 illustrates a system is some ways similar to that described above but where transport of the CaCO₃ rich solid is carried out with a fluidization medium which is not associated with a oxygen based combustion process. The heating source may then be air fired or use a separate hot stream solid, liquid, gas etc. In this case the system shown in Fig. 2 is integrated together with a system for carbonation, thus a system wherein CO₂ in, for example, a flue gas is captured by reaction with calcium oxide, CaO, to form calcium carbonate CaCO₃. The calcium carbonate CaCO₃ rich stream is fed to the system 1 via pipe 234 into a CFB riser 240.

The solids comprising of calcium carbonate CaCO₃ and parts of calcium oxide CaO is forwarded through the CFB riser 240 by fluidizing gas recycled in the system via duct 221, in this case the fluidization gas is not a hot combustion product but may be a hot product of the decarbonisation /calcination reaction.

The solid stream is forwarded from the CFB riser 240 via pipe 241 to the separating unit 220 for gas-solid separation, wherein the solids comprising calcium carbonate and calcium oxide are separated from the carbon dioxide rich gas.

The solid stream separated in the separating unit 220 is forwarded to the fluidized bed reactor 210, being a bubbling fluidized bed reactor, via the outlet 222 and duct 224. The solid stream is entering at the top of the bubbling fluidized bed reactor 210.

The reactor is acting at a temperature of between 850 and 950 °C, preferably at a temperature of 900 °C.

In this embodiment the bubbling fluidized bed reactor is indirectly heated. A stream of hot gas, liquid or solid is forwarded to the heating system 212 which in this embodiment is an indirect heating system, fed with a hot stream via duct 218, the cooled stream is leaving the system 212 via duct 219.

The fluidizing gas used for the fluidized bed reactor 210 is fed to the reactor via duct 253, and being recycled into the system, split from the stream of carbon dioxide rich flue gas forwarded from the separating unit via duct 221, but may also be supplemented via a some other gas which does not react an inert stream such as steam The gas stream forwarded via duct 221 is passing a cooler 255 where it is cooled in a system of heat exchangers which utilizes the heat for generating steam or preheating other feed streams to the plant. A portion of the CO₂ may be left above 500°C depending on the type of CO₂ recycle fan, however, at one point the CO₂ stream needs to be cooled to remove water condensate before transport, the desired temperature depends on the available utilities and the final product specifications. The carbon dioxide rich gas may be forwarded for further processing via duct 228. Optionally, the water content may be reduced or eliminated in a condenser 258, before forwarding the said gas for further processing of the carbon dioxide rich gas which also may be denoted 'the CO₂ product'.

The gas passing in duct 221 and recirculated into the system via duct 25 after passing a fan 251 for pressurizing the gas stream before further processing. The carbon dioxide rich gas stream passes fan 251 wherein the stream is also split, and forwarded via stream 228 and via stream 225. Some of the carbon dioxide rich gas stream is recycled, via duct 227, for the purpose to transport the CaCO₃ from pipe 234, via the CFB riser 240 to the separating unit 20 and reactor 210.

The bubbling fluidized bed reactor 210 is more specifically a bubbling fluidized bed heat exchanger where the solid phase undergoes reaction. The reactor is fed with a smaller volume of fluidizing CO₂ rich gas via 253. After separation of the carbon dioxide rich gas, the carbon dioxide rich gas may be further divided into a second stream, that is pressurized via fan 252 and forwarded via duct 253 into the fluidized heat exchanger for fluidizing the solid components present in the reactor. This portion of recycled carbon dioxide rich gas is used to provide the desired heat transfer conditions.

Another way of adjust the desired heat transfer conditions, and to modify, for example to reduce, the equilibrium partial pressure of the carbon dioxide, is by the addition of steam to the bubbling fluidized bed reactor 210. The portion of water may be added via pipe 254 and also functions to fluidize the solid content of the reactor.

In the bubbling fluidized bed reactor 210, the particles of solid material comprising calcium carbonate and calcium oxide are mixed and heated to temperature suitable for decarbonisation, to a temperature corresponding to the equilibrium partial pressure of carbon dioxide. The estimation of the partial pressure is based on the compositions of the fluidizing gas leaving the fluidized bed in the reactor 210.

Herein, the composition of CO₂ depends on the composition of the recycled fluidizing gas, the rate of fluidization and the rate of the decarbonisation reaction, thus the CO₂ production. The composition of CO₂ depends also on the amount of fluidization steam used and any leakage of air into the system.

The modification of the CO₂ partial pressure may also be performed via the presence of a different inert component. The inert component is added for the purpose of lowering the partial pressure of CO₂ and the required operating temperature for the decarbonisation reaction of calcium carbonate CaCO₃ and is then separated in a later stage of the process.

Although schematically the bubbling fluidized bed reactor 210 is separated from the CFB reactor 240, it is also possible to combine both unit operations into one piece of equipment where the lower section is dedicated to the function of 10 and the upper section to the function of 240. In this manner the Recycle fluidization gas enters the CFB riser in a manner similar to that of secondary air in a CFB combustor to raise gas side superficial velocity and entrain solids. In this manner the lower section of densely fluidized particles lies below the entering recycle fluidization gas, stream 227.

If units 210 and 240 are not built together, a small portion of the solids reacting in 210 are entrained in the fluidization gas and evolving CO₂, stream 237, which are separated in the separating unit 245, wherein the separation of solid and gas is performed. For example, the separating unit 245 is a cyclone. The gas stream from the reactor is routed via duct 237 to the separating unit 45, then the separated CO₂ is forwarded to duct 221, via duct 223. The calcium oxide CaO may be forwarded via pipe 235 back to the CFB or to a connected carbonation reactor via 235.

If unit 10 and 40 are built together, the small portion of entrained solids in the released CO₂ and fluidizing gas flow, 253, rise into the CFB riser in parallel to stream 273. In this case the level of the dense solid phase is below the point at which 273 enters into the CFB riser and defines the point at which the lower bubbling fluidized bed reactor function ends and the upper CFB reactor function begins. In this case separation unit 245 and the connecting streams is not required.

In any case, a CaO rich solid stream is removed from the bubbling fluidized bed reactor, unit 210, via pipe 231. The solids may be either send to the Carbonator reactor system or battery limit as CaO product via pipe 233.

Optionally, the CFB riser 40, 240 utilizes addition of fuel (via pipe 76, 276) and oxy combustion for a dual function of transporting and heating solids via an internal combustion of said fuels using oxygen (via duct 277) ultimately allow further decarbonisation of particles in the CFB riser.

The system 1 may include the CFB riser 40, 240 being placed upstream the bubbling fluidized bed reactor 10, 210. In another arrangement, the CFB riser 40, 240 is placed downstream the bubbling fluidized bed reactor 10,210.

By the term "CaO rich stream" or "CaO rich solid stream" it is herein meant streams comprising as a main part CaO. Also other solids may be present, such as remaining CaCO₃, ashes, sand etc.

By the term "CaCO₃ rich stream" or "CaCO₃ rich solid stream" it is herein meant streams comprising as a main part CaCO₃. Also other solids may be present, such as remaining CaO, ashes, sand etc.

By the term "CO₂ rich stream" or "CO₂ rich flue gas" it is herein meant a gas stream comprising CO₂ as a main part. However, also gases may be present.

In this scheme it is also possible to add heat directly into the CFB riser via an oxygen based combustion process burning some type of fuel, for example coal. In this case additional heat input is possible to provide additional heat if required via direct heating in the CFB riser.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for decarbonisation of metal carbonate MeCO₃ comprising into metal oxide MeO and carbon dioxide CO₂:
fluidizing MeCO₃ in a fluidized bed reactor using CO₂ rich exhaust gas stream from an oxy combustion process to produce a MeO rich stream and a CO₂ rich stream;
heating the MeCO₃ to a temperature for decarbonisation of the metal carbonate MeCO₃ into metal oxide MeO and carbon dioxide CO₂, wherein the temperature is corresponding to the equilibrium pressure of carbon dioxide CO₂,
providing residence time for said metal carbonate MeC03 required for said decarbonisation into calcium oxide and carbon dioxide;
adjusting the partial pressure of carbon dioxide;
transporting a metal carbonate MeCO₃ stream to the fluidized bed reactor for decarbonisation by a circulating fluidized bed (CFB);
separating carbon dioxide CO₂ rich gas stream from the metal carbonate MeCO₃ stream to form metal carbonate MeCO₃ rich stream before its decarbonisation in the fluidized bed reactor.

2. A method according to claim 1 wherein additional residence time is provided by the coupling of a fluidized bed reactor selected from a bubbling fluidized bed reactor or turbulent fluidized bed reactor; preferably a bubbling fluidized bed reactor.

3. A method according to any of claims 1 or 2 wherein the metal carbonate MeCO₃ is heated to a temperature allowing spontaneous decarbonization, for CaCO₃ this temperature depends on the partial pressure of CO₂ and may range up to 950 °C .

4. A method according to any claims 1 to 3, wherein the partial pressure of CO₂ is adjusted by adding inert components during the decarbonisation; preferably the partial pressure of CO₂ is adjusted by adding water, preferably the partial pressure of CO₂ is lowered.

5. A method according to any of claims 1 to 4, wherein the heating of MeCO₃ is by direct heating; preferably by an oxy fueled process generating hot combustion gases.

6. A method according to any of claims 1 to 4, wherein the temperature is provided by indirect heating; preferably via heat exchange system wherein heat is provided via circulating gas, liquid or solid stream.

7. A method according to any of claims 1 to 4, wherein the temperature of the reaction is provided by a combination of direct heating and indirect heating.

8. A system 1 for decarbonisation of metal carbonate MeCO₃ into metal oxide MeO and carbon dioxide CO₂ comprising:
- a fluidized bed reactor 10, 210 for decarbonisation of metal carbonate MeCO₃ into calcium dioxide CO₂ and metal oxide MeO; wherein the reactor 10, 210 is a fluidized bed operating at a temperature above the temperature corresponding to the equilibrium pressure of carbon dioxide CO₂, and providing residence time for metal carbonate MeCO₃ required for decarbonisation into metal oxide MeO and carbon dioxide CO₂; and wherein the partial pressure of carbon dioxide is adjusted;
- separating unit 20, 220 for separating into carbon dioxide CO₂ rich flue gas stream and metal oxide MeO rich stream 22, 222;
- heating system 12, 212 for heating said fluidized bed reactor; providing temperature for decarbonisation of the calcium carbonate;
- a circulating fluidized bed (CFB) riser 40, 240 used to transport metal carbonate MeCO₃ rich stream to said separating unit 20, 220 before entering said fluidized bed reactor 10, 210;
- duct forwarding said carbon dioxide CO₂ rich gas stream for further processing;
- pipe 33, 233 forwarding metal oxide MeO for further processing; and
- pipe 34, 234 forwarding metal carbonate MeCO₃ rich stream to said CFB riser 40, 240.

9. A system according to claim 8 wherein the fluidized bed reactor 10, 210 and the CFB riser 40, 240 are integrated into one unit.

10. A system according to claim 8 or 9 where said CFB riser 40,240 utilizes addition of fuel and oxy combustion for a dual function of transporting and heating solids via an internal combustion of said fuels using oxygen ultimately allow further decarbonisation of particles in the CFB riser..

11. A system according to any of claims 8 to 10 wherein the heating system 12 provides a temperature of between 850 and 950 °C for decarbonation of metal carbonate MeCO₃ into carbon dioxide CO₂ and metal oxide MeO.

12. A system according to any of claims 8 to 11, wherein the heating system 12, 212 is an oxy fueled firing system; preferably the heating system is an oxy fired gas turbine; preferably the heating system 12, 212 is an air fired system.

13. A system according to any of claims 8 to 12, wherein the adjustment of the partial pressure of CO₂ is provided by the addition and subsequent separation of an inert component.

14. A system according to claim 8 to 13, wherein the partial pressure of carbon dioxide CO₂ is adjusted by the addition of water to the reactor 10.

15. A system according to claim 8 wherein the partial pressure of carbon dioxide is adjusted by addition of water to the reactor via recycle fluidization medium 254.

16. A system according to claim 8 wherein the partial pressure of carbon dioxide is adjusted by addition of water to the reactor via recycling flue gas containing water 71.
